# EUROPÄISCHE PATENTSCHRIFT

(11) **EP 2 848 112 B1**
(45) Veröffentlichungstag und Bekanntmachung des Hinweises auf die Patenterteilung: **08.06.2016**
(21) Anmeldenummer: 14176917.4
(22) Anmeldetag: 14.07.2014
(51) Int. Cl.: A01F 12/40, A01D 41/12

(54) **Mähdrescher mit einer Abscheidevorrichtung**
Combine harvester with a separating device
Moissonneuse-batteuse équipée d'un dispositif de séparation

(30) Priorität: 11.09.2013 DE 102013109983
(43) Veröffentlichungstag der Anmeldung: 18.03.2015
(73) Patentinhaber: CLAAS Selbstfahrende Erntemaschinen GmbH, 33428 Harsewinkel (DE)
(72) Erfinder: Brinkmann, Jörn, 33428 Harsewinkel (DE); Pölling, Benedikt, 48653 Coesfeld (DE)

(56) Entgegenhaltungen:
- EP-A1- 2 360 413
- EP-A2- 1 031 272
- DE-A1-102005 056 553
- DE-C- 935 465
- US-A1- 2003 003 974

## Beschreibung

Die vorliegende Erfindung betrifft einen Mähdrescher mit einer Abscheidevorrichtung gemäß dem Oberbegriff des Anspruches 1.

Mähdrescher weisen auf Grund ihrer zunehmenden Leistungsfähigkeit bei der Verarbeitung von Erntegut ein zunehmendes Eigengewicht auf, was zu einem Konflikt mit Zulassungsvorschriften für den Betrieb von Mähdreschern auf der Straße führen kann, wenn die gesetzlich zulässige Achslast überschritten wird. Daneben wirkt sich das zunehmende Gewicht auch auf die Bodenverdichtung sowie den Treibstoffverbrauch aus. Zur Verarbeitung von Erntegut umfassen Mähdrescher Arbeitsaggregate, die während des Erntebetriebes nicht permanent zum Einsatz kommen. Dies sind insbesondere eine Häckselvorrichtung, der am Ende eines Ausdrusch- und Abscheideprozesses Erntegut, im Wesentlichen Stroh, zuführbar ist, sowie eine der Häckselvorrichtung nachgeordnete Verteilvorrichtung. Das von der Häckselvorrichtung zerkleinerte Erntegut wird an die der Häckselvorrichtung nachgeordnete Verteilvorrichtung überführt, die das Häckselgut im Wesentlichen über die Breite eines Erntevorsatzes zur Aufnahme von Erntegut auf dem Boden verteilt. Soll das Stroh nicht gehäckselt sondern als Schwad auf dem Boden abgelegt werden, so wird das Stroh durch ein Umlenkmittel an der Häckselvorrichtung vorbeigeführt, während die Verteilvorrichtung durch geeignete Verstellmittel in eine Stellung überführt wird, in der das Stroh diese ebenfalls umgehen kann. Das Umlenkmittel wie auch die Verstellmittel erfordern eine zusätzliche Aktorik am Mähdrescher. Hieraus resultieren bauraumtechnische Herausforderungen. So kann der Winkel des als Schwadrutsche ausgeführten Umlenkmittels zur Umgehung der Häckselvorrichtung oftmals nur sehr flach ausgeführt werden. Die Verstellmittel, um die Verteilvorrichtung aus ihrer Verteilstellung in die Schwadablagestellung zu überführen, sind konstruktiv sehr aufwändig. Neben dem konstruktiven Aufwand resultiert hieraus auch eine weitere Gewichtszunahme des Mähdreschers insbesondere im Bereich der Lenkachse.

Ein Mähdrescher der zuvor beschriebenen Art ist beispielsweise aus der EP 2 286 655 A1 bekannt.

Aus der US2003/003974 A1 ist ein Mähdrescher mit einer Abscheidevorrichtung bekannt, der eine separater Häckselvorrichtung nachgeordnet ist. Der Häckselvorrichtung schließt sich eine Verteilvorrichtung an, durch die Erntegut auf dem Boden verteilbar ist.

Die EP 1 031 272 A2 beschreibt eine Verteilvorrichtung einer Häckselvorrichtung für einen Mähdrescher, die in einem aus zwei Gehäuseabschnitten ausgebildeten Gehäuse angeordnet sind.

Somit liegt der Erfindung die Aufgabe zu Grunde, einen Mähdrescher der eingangs genannten Art derart weiterzubilden, um die genannten Nachteile zu vermeiden.

Diese Aufgabe wird erfindungsgemäß durch die kennzeichnenden Merkmale des Anspruches 1 gelöst.

Vorteilhafte Weiterbildungen der Erfindung sind Gegenstand der Unteransprüche.

Gemäß dem Anspruch 1 wird ein Mähdrescher mit einer Abscheidevorrichtung, aus der ein austretender Erntegutstrom einer Häckselvorrichtung zuführbar ist, welche das Erntegut bearbeitet und an eine der Häckselvorrichtung nachgeordnete Verteilvorrichtung weiterleitet, durch die das bearbeitete Erntegut auf dem Boden verteilbar ist, oder der aus der Abscheidevorrichtung austretende Erntegutstrom unter Umgehung der Häckselvorrichtung und der Verteilvorrichtung als Schwad auf dem Boden ablegbar ist, vorgeschlagen, wobei die Verteilvorrichtung und/oder Teile der Häckselvorrichtung für einen Betrieb des Mähdreschers im Schwadablagemodus oder bei Straßenfahrt lösbar am Mähdrescher angeordnet sind, dadurch gekennzeichnet, dass die Verteilvorrichtung und/oder Teile der Häckselvorrichtung mittels einer in den Mähdrescher integrierten Hebevorrichtung aufnehmbar beziehungsweise ablegbar ist. Das Lösen der Verteilvorrichtung und/oder von Teilen der Häckselvorrichtung bei einem Betrieb im Schwadablagemodus oder bei Straßenfahrt des Mähdreschers kann somit temporär erfolgen, wenn eine Verteilung von gehäckseltem Stroh nicht vorgesehen ist. Durch das Lösen des zumindest einen Arbeitsaggregates vom Mähdrescher lässt sich nicht nur das Gesamtgewicht des Mähdreschers reduzieren, was sich mit Blick auf das zulässige Gesamtgewicht bei Straßenfahrt positiv auswirkt; es wird darüber hinaus auch der Treibstoffverbrauch gesenkt. Ein weiterer positiver Aspekt ist die Verbesserung des Lenkverhaltens bei Straßenfahrt, da eine nicht unerhebliche Gewichtsreduzierung der Lenkachse erzielt werden kann. Um insbesondere als Lohnunternehmer flexibel agieren zu können, kann vorgesehen sein, dass die von dem Mähdrescher gelöste Verteilvorrichtung beispielsweise auf einem Schneidwerkswagen, der im rückwärtigen Bereich des Mähdreschers ankoppelbar ist, abgelegt und mitgeführt wird, wenn unterschiedliche Schläge zu bearbeiten sind. Somit stünde die Verteilvorrichtung jederzeit zur Verfügung, wenn das Stroh gehäckselt und verteilt werden soll, das heißt der Mähdrescher im Häckselmodus betrieben werden soll. Die Verteilvorrichtung kann als angetriebener Radialverteiler ausgeführt sein, der an einen Antriebsstrang des Mähdreschers ankoppelbar ist und das auszubringende Erntegut aktiv beschleunigt. Die Verteilvorrichtung kann auch als passiv arbeitende Umlenkvorrichtung ausgeführt sein, die Leitelemente aufweist, um eine gleichmäßige Verteilung zu erreichen. Dabei können die Leitelemente verstellbar sein, um auf äußere Einflüsse wie beispielsweise Seitenwind reagieren zu können.

Die Verteilvorrichtung und/oder Teile der Häckselvorrichtung sind mittels einer in den Mähdrescher integrierten Hebevorrichtung aufnehmbar beziehungsweise ablegbar. Die in den Mähdrescher integrierte Hebevorrichtung ermöglicht ein Ablegen beziehungsweise Aufnehmen der Verteilvorrichtung und/oder von Teile der Häckselvorrichtung in relativ kurzer Zeit durch eine Bedienperson. Hierzu kann die Verteilvorrichtung als ein Modul ausgeführt sein. Das Modul kann alle Komponenten der Verteilvorrichtung umfassen, die für Antrieb, Gutförderung und Gutverteilung durch die Verteilvorrichtung notwendig sind. Durch die Integration der Hebevorrichtung in den Mähdrescher ist der Vorgang des Ablegens beziehungsweise Aufnehmens durch nur eine Bedienperson erledigbar.

Dabei kann die Verteilvorrichtung werkzeuglos mit einem Antriebsstrang des Mähdreschers koppelbar beziehungsweise entkoppelbar sein. Hierdurch wird das Handling bei der Ankopplung beziehungsweise der Entkopplung signifikant vereinfacht.

Hierzu kann die Verteilvorrichtung mittels einer mechanischen Kupplung mit dem Antriebsstrang koppelbar sein.

In bevorzugter Ausbildung kann die Verteilvorrichtung werkzuglos mit einem Hydraulik- und einem Stromkreislauf des Mähdreschers koppelbar sein.

Hierbei kann die Verteilvorrichtung ein als Multikuppler ausgeführtes Koppelelement aufweisen, durch das die Verteilvorrichtung gleichzeitig mit einem Hydraulik- und einem Stromkreislauf des Mähdreschers verbindbar oder von diesem lösbar ist.

Bevorzugt kann an der Verteilvorrichtung auf ihrer der Häckselvorrichtung zugewandten Seite zumindest ein Führungsmittel vorgesehen sein, das in eine korrespondierende Lagerstelle an einem Gehäuseabschnitt des Mähdreschers einbringbar ist.

Insbesondere kann der Gehäuseabschnitt Teil eines die Häckselvorrichtung aufnehmenden Gehäuses sein. Die Lagerung unmittelbar am Gehäuse der Häckselvorrichtung ist von Vorteil, da sich zwischen dem Gehäuse der Häckselvorrichtung und der Verteilvorrichtung keine den Gutübergang störende Kanten durch einen Versatz zueinander einstellen. Somit kann der Gutübergang bei der Abgabe durch die Häckselvorrichtung an die Verteilvorrichtung mit Blick auf die dem Erntegut innewohnende kinetische Energie möglichst verlustfrei erfolgen kann.

Vorzugsweise kann die Verteilvorrichtung in ihrer in die Lagerstellen eingebrachten Position um die Führungsmittel schwenkbar sein. Zwecks Ablage kann die Verteilvorrichtung um die Längsachse des mindestens einen Führungsmittels zunächst in Richtung des Bodens geschwenkt werden. Erst bei Erreichen eines bestimmten Neigungswinkels kann das mindestens eine Führungsmittel aus der Lagerstelle gleiten. Umgekehrt wird bei der Aufnahme der Verteilvorrichtung zuerst das mindestens eine Führungsmittel von der Lagerstelle aufgenommen, bevor die Verteilvorrichtung auf die Häckselvorrichtung zu geschwenkt wird. Erst mit ihrer exakten Ausrichtung zueinander ist die Verteilvorrichtung an den Antriebsstrang sowie den Hydraulik- und Stromkreislauf des Mähdreschers koppelbar.

Dazu können die Lagerstellen als Widerlager ausgeführt sein. Hierdurch kann sowohl bei einem Aufnehmen der Verteilvorrichtung sichergestellt werden, dass nach Aufnahme des mindestens einen Führungsmittels durch die korrespondierende Lagerstelle die Verteilvorrichtung in Richtung der Häckselvorrichtung schwenkbar ist. Entsprechend kann bei einem Ablassen der Verteilvorrichtung gewährleistet werden, dass die Verteilvorrichtung beim Ablassen zunächst durch das Schwenken um die Längsachse des mindestens eine Führungsmittels von der Häckselvorrichtung beabstandet wird, bevor das mindestens eine Führungsmittel aus der lagerstelle gleiten kann.

Hierzu können die Verteilvorrichtung ein Anschlagmittel aufweisen, dessen Anordnung vom Schwerpunkt der Verteilvorrichtung beabstandet vorgesehen ist. Beim Anheben der Verteilvorrichtung kann diese entsprechend um die Längsachse des Anschlagmittels kippen, so dass das Führungsmittel in Richtung der Lagerstelle weist. Hierdurch kann die Aufnahme des mindestens einen Führungsmittels durch die Lagerstelle vereinfacht werden. In gleicher Weise wirkt sich diese Anordnung beim Ablassen der Verteilvorrichtung mittels der Hebevorrichtung aus. Zunächst kann die Verteilvorrichtung in der Lagerstelle ausschwenken, bevor sie sich vollständig vom Mähdrescher löst.

Insbesondere kann die Hebevorrichtung als Kettenzug ausgeführt sein.

Alternativ kann dass die Hebevorrichtung als hydraulischer Koppelarm ausgeführt sein.

Gemäß einer weiteren Ausführungsform kann die Hebevorrichtung als ein über eine Winde betätigbares Drahtseil ausgeführt sein.

Gemäß einer vorteilhaften Weiterentwicklung kann vorgesehen sein, dass zumindest Teile der Häckselvorrichtung lösbar an dem Mähdrescher angeordnet sind. So kann beispielsweise vorgesehen sein, dass auch die Häckseltrommel der Häckselvorrichtung mittels einer in den Mähdrescher integrierten Hebevorrichtung aufnehmbar beziehungsweise ablegbar ist. So könnte in einem ersten Schritt die Verteilvorrichtung abgelegt werden und in einem zweiten Schritt die Häckseltrommel. Die Aufnahme in und der Anschluss an den Mähdrescher von Häckseltrommel und Verteilvorrichtung erfolgt entsprechend in umgekehrter Reihenfolge.

Die vorliegende Erfindung wird nachstehend anhand eines in den Zeichnungen dargestellten Ausführungsbeispiels erläutert.

Es zeigen:
- Fig. 1: eine schematische Ansicht eines Mähdreschers;
- Fig. 2: eine Teilansicht des rückwärtigen Bereiches des Mähdreschers mit auf dem Boden abgelegter Verteilvorrichtung;
- Fig. 3: eine Teilansicht des rückwärtigen Bereiches des Mähdreschers mit von einer Hebevorrichtung aufgenommener Verteilvorrichtung;
- Fig. 4: eine Teilansicht des rückwärtigen Bereiches des Mähdreschers angekoppelter Verteilvorrichtung.

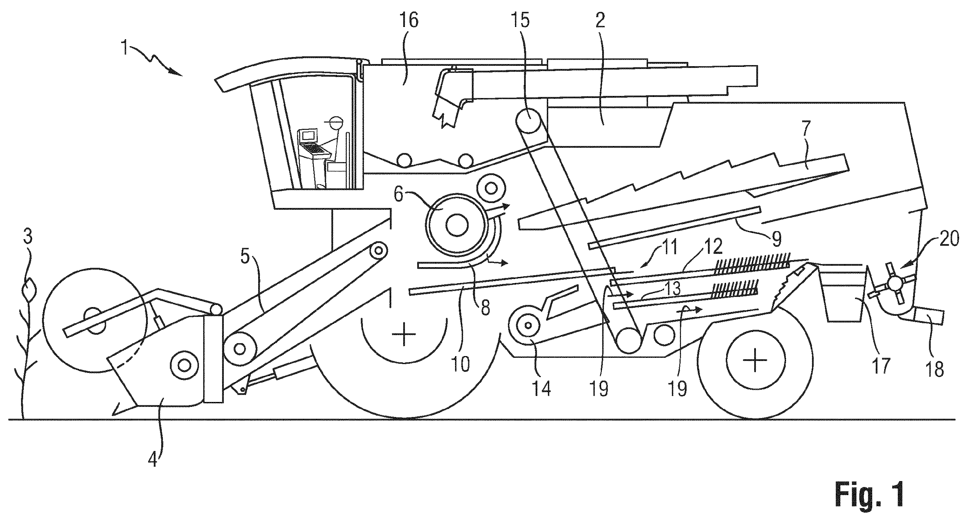

Die Fig.1 zeigt in schematischer Darstellung eine selbstfahrende landwirtschaftliche Erntemaschine 1, welche zur Aufnahme und zur Verarbeitung von Erntegut 3 dient. Bei der selbstfahrenden landwirtschaftlichen Erntemaschine 1 handelt es sich um einen Mähdrescher 2, welcher mit einem Schneidwerk 4 ausgestattet ist, das mit Hilfe des Schrägförderers 5 das Erntegut 3 einer eine Dreschtrommel 6 sowie einen Dreschkorb 8 aufweisenden Dreschvorrichtung zuführt, an die sich eine als Hordenschüttler 7 ausgeführte Abscheidevorrichtung anschließt. Die Abscheidevorrichtung kann auch als zumindest ein Axialtrennrotor ausgeführt sein. Unterhalb des Dreschkorbes 8 und des Hordenschüttlers 7 befindet sich ein Rücklaufboden 9 und eine Rücklaufvorrichtung 10, die ausgeschiedenes Erntegut 3 einer Reinigungseinrichtung 11, bestehend aus Ober 12- und Untersieb 13, zuführt. Das Obersieb 12 und das Untersieb 13 werden über ein Reinigungsgebläse 14 mit einem Luftstrom 19 beaufschlagt, welcher durch und über die Siebe 12,13 strömt. Das gereinigte Erntegut 3 gelangt über einen Kornelevator 15 in einen Korntank 16 und wird dort gesammelt. Ein mittels des Hordenschüttlers 7 geförderter Erntegutanteil, im Wesentlichen Stroh, ist über den hinteren Teil des Mähdreschers einer Häckselvorrichtung 20 zuführbar.

Die von dem Obersieb 12 und dem Untersieb 13 durch die Bewegung derselben und durch den von dem Reinigungsgebläse erzeugten Luftstrom 19 zum hinteren Ende des Mähdreschers 2 transportierten Erntegutanteile, wie beispielsweise Spreu, werden einem Spreu-Wurfgebläse 17 zugeführt. Das von der Häckselvorrichtung 20 zerkleinerte Erntegut wird einer Verteilvorrichtung 18, die im dargestellten Ausführungsbeispiel als aktiv angetriebene Radialverteiler ausgeführt ist, zugeführt. Der Verteilvorrichtung 18 kommt die Aufgabe zu, die Erntegutanteile auf dem Feldboden im Wesentlichen gleichmäßig über die Breite des Schneidwerkes 4 verteilt auszubringen. Hierzu erstreckt sich die Verteilvorrichtung 18 im Wesentlichen über die Breite des Mähdreschers 2. Das von dem ersten Spreu-Wurfgebläse 17 und von der Reinigungsvorrichtung 11 zugeführte Erntegut kann auch gemeinsam mit dem von dem Häckselvorrichtung 20 kommenden Erntegutanteilen der Verteilvorrichtung 18 zur Verteilung auf dem Feldboden zugeführt werden.

Alternativ ist der Mähdrescher 2 betreibbar, das ausgedroschene Stroh als Schwad auf dem Feldboden abzulegen. Hierzu wird das von dem Hordenschüttler 7 abgegebene Stroh unter Umgehung des Häckselaggregates 20 auf dem Feldboden abgelegt. Das als Schwad auf dem Feldboden abgelegte Stroh kann anschließend von einer Ballenpresse aufgenommen werden.

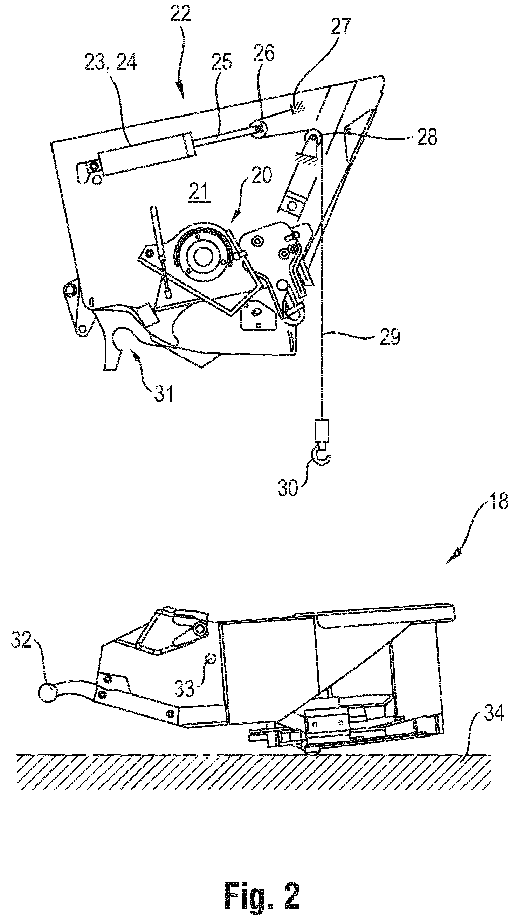

In Fig. 2 ist eine Teilansicht des rückwärtigen Bereiches des Mähdreschers 2 dargestellt, welche der Übersichtlichkeit halber lediglich Teile der Häckselvorrichtung 20, eine die Häckselvorrichtung 20 begrenzende Wandung 21, die Teil eines die Häckselvorrichtung 20 umgebenden Gehäuses ist, zeigt. Oberhalb der Häckselvorrichtung 20 ist eine Hebevorrichtung 22 angeordnet, die als ein hydraulischer Koppelarm 23 ausgeführt ist. Der Koppelarm 23 besteht aus einem Hydraulikzylinder 24, an dessen Kolbenstange 25 endseitig eine Öse 26 angeordnet ist. Durch diese Öse 26 ist ein Drahtseil 29 geführt, welches an einem Befestigungselement 27 im Inneren des Mähdreschers 2 befestig ist. Das Drahtseil 29 wird über eine beabstandet zum Koppelarm 23 angeordnete Umlenkeinrichtung 28 geführt, so dass das Drahtseil 29 hinter der Häckselvorrichtung 20 vorbeiführbar ist. Am Ende des Drahtseiles 29 befindet sich ein Haken 30. Auf einer Ebene unterhalb der Häckselvorrichtung 20 befindet sich eine Lagerstelle 31. Die Länge des Drahtseiles 29 wird durch das Ein- und Ausfahren des Hydraulikzylinders 24 verändert. In voll ausgefahrener Stellung der Kolbenstange 25 reicht der Haken 30 bis auf den Boden 34, um ein einfaches Verbinden mit der Verteilvorrichtung 18 zu ermöglichen.

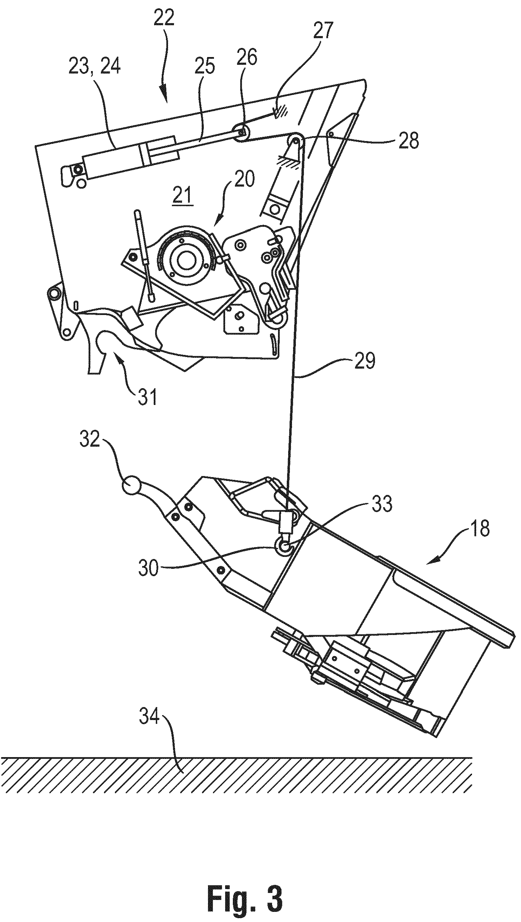

Weiterhin zeigt die Fig. 2 die Verteilvorrichtung 18 in einer auf dem Boden 34 abgelegten Position. Um die Verteileinrichtung 18 durch die Hebevorrichtung 22 aufnehmen zu können, weist die Verteilvorrichtung 18 ein Anschlagmittel 33 auf, welches dem Einhängen des Haken 30 der Hebevorrichtung 22 dient. Die Anordnung des Anschlagmittels 33 an der Verteilvorrichtung 18 ist derart gewählt, dass sich der Schwerpunkt der Verteilvorrichtung 18 hinter dem Anschlagmittel 33 befindet. Somit wird beim Anheben erreicht, dass die Verteilvorrichtung 18 mit einem an der dem Mähdrescher 2 zugewandten Seite des Verteilvorrichtung 18 angeordneten Führungsmittel 32 voran auf den rückwärtigen Bereich des Mähdreschers 2 zubewegt wird, wie in Fig. 3 angedeutet ist.

Die Darstellung in Fig. 3 zeigt die Verteilvorrichtung 18 in ihrer von der Hebevorrichtung 22 aufgenommen Position. Die Kolbenstange 25 ist teilweise eingezogen, so dass die Verteilvorrichtung 18 frei in der Luft hängt.

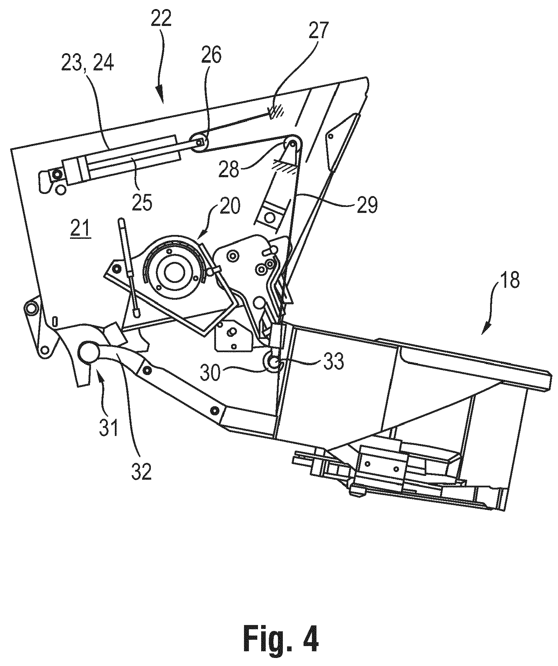

Gemäß Fig. 4 wurde die Kolbenstange 25 soweit eingezogen, dass das Führungsmittel 32 von der Lagerstelle 31 aufgenommen wurde. Die Lagerstelle 31 fungiert als Widerlager, in welchem sich das Führungsmittel 32 abstützt. Somit wird erreicht, dass bei einem weiteren Einziehen der Kolbenstange 25 die Verteilvorrichtung 18 um die Längsachse der Lagerstelle 31 in Richtung der Häckselvorrichtung 20 geschwenkt wird, bis die Verteilvorrichtung 18 ihre Endposition in Bezug auf die Häckselvorrichtung 20 eingenommen hat.

In dieser Position ist die Verteilvorrichtung 18 mit einem Antriebsstrang sowie einem Hydraulik- und Stromkreislauf des Mähdreschers 2 koppelbar.

Der Mähdrescher 2 ermöglicht in der vorstehend beschrieben Ausführung das temporäre Lösen der Verteilvorrichtung 18, wenn der Mähdrescher 2 im Schwadablagemodus oder im Straßenfahrmodus betrieben wird, wobei die Verteilvorrichtung 18, beispielsweise auf einem an den Mähdrescher angekoppelten Schneidwerkswagen abgelegt, mit dem Mähdrescher 2 mitführbar ist, um diese bei Bedarf wieder anbringen beziehungsweise anschließen zu können, das heißt bei einem neuerlichen Betrieb des Mähdreschers 2 im Häckselmodus.

**Bezugszeichenliste**

| | | | |
|---|---|---|---|
| **1** | **Erntemaschine** | **32** | **Führungsmittel** |
| **2** | **Mähdrescher** | **33** | **Anschlagmittel** |
| **3** | **Erntegut** | **34** | **Boden** |
| **4** | **Schneidwerk** | | |
| **5** | **Schrägförderer** | | |
| **6** | **Dreschtrommel** | | |
| **7** | **Hordenschüttler** | | |
| **8** | **Dreschkorb** | | |
| **9** | **Rücklaufboden** | | |
| **10** | **Rücklaufvorrichtung** | | |
| **11** | **Reinigungseinrichtung** | | |
| **12** | **Obersieb** | | |
| **13** | **Untersieb** | | |
| **14** | **Reinigungsgebläse** | | |
| **15** | **Kornelevator** | | |
| **16** | **Korntank** | | |
| **17** | **Spreu-Wurfgebläse** | | |
| **18** | **Verteilvorrichtung** | | |
| **19** | **Luftstrom** | | |
| **20** | **Häckselvorrichtung** | | |
| **21** | **Wandung** | | |
| **22** | **Hebevorrichtung** | | |
| **23** | **Koppelarm** | | |
| **24** | **Hydraulikzylinder** | | |
| **25** | **Kolbenstange** | | |
| **26** | **Öse** | | |
| **27** | **Befestigungselement** | | |
| **28** | **Umlenkeinrichtung** | | |
| **29** | **Drahtseil** | | |
| **30** | **Haken** | | |
| **31** | **Lagerstelle** | | |

## Patentansprüche

1. Mähdrescher (2) mit einer Abscheidevorrichtung (7), aus der ein austretender Erntegutstrom einer Häckselvorrichtung (20) zuführbar ist, welche das Erntegut bearbeitet und an eine der Häckselvorrichtung (20) nachgeordnete Verteilvorrichtung (18) weiterleitet, durch die das bearbeitete Erntegut auf dem Boden (34) verteilbar ist, oder der aus der Abscheidevorrichtung (7) austretende Erntegutstrom unter Umgehung der Häckselvorrichtung (20) und der Verteilvorrichtung (18) als Schwad auf dem Boden (34) ablegbar ist, wobei die Verteilvorrichtung (20) und/oder Teile der Häckselvorrichtung (20) für einen Betrieb des Mähdreschers (2) im Schwadablagemodus oder bei Straßenfahrt lösbar am Mähdrescher (2) angeordnet sind, **dadurch gekennzeichnet, dass** die Verteilvorrichtung (18) und/oder Teile der Häckselvorrichtung (20) mittels einer in den Mähdrescher (2) integrierten Hebevorrichtung (22) aufnehmbar beziehungsweise ablegbar ist.

2. Mähdrescher (2) nach Anspruch 1, **dadurch gekennzeichnet, dass** die Verteilvorrichtung (18) werkzeuglos mit einem Antriebsstrang des Mähdreschers (2) koppelbar ist.

3. Mähdrescher (2) nach Anspruch 2, **dadurch gekennzeichnet, dass** die Verteilvorrichtung (18) mittels einer mechanischen Kupplung mit dem Antriebsstrang koppelbar ist.

4. Mähdrescher (2) nach einem der Ansprüche 1 bis 3, **dadurch gekennzeichnet, dass** die Verteilvorrichtung (18) werkzuglos mit einem Hydraulik- und einem Stromkreislauf des Mähdreschers (2) koppelbar ist.

5. Mähdrescher (2) nach Anspruch 4, **dadurch gekennzeichnet, dass** die Verteilvorrichtung (18) ein als Multikuppler ausgeführtes Koppelelement aufweist, durch das die Verteilvorrichtung (18) gleichzeitig mit dem Hydraulik- und dem Stromkreislauf verbindbar oder von diesem lösbar ist.

6. Mähdrescher (2) nach einem der Ansprüche 1 bis 5, **dadurch gekennzeichnet, dass** an der Verteilvorrichtung (18) auf ihrer der Häckselvorrichtung (20) zugewandten Seite zumindest ein Führungsmittel (32) vorgesehen ist, das in eine korrespondierende Lagerstelle (31) an einem Gehäuseabschnitt des Mähdreschers (2) einbringbar ist.

7. Mähdrescher (2) nach Anspruch 6, **dadurch gekennzeichnet, dass** der Gehäuseabschnitt Teil eines die Häckselvorrichtung (20) aufnehmenden Gehäuses ist.

8. Mähdrescher (2) nach Anspruch 6 oder 7, **dadurch gekennzeichnet, dass** die Verteilvorrichtung (18) in ihrer in die Lagerstelle (31) eingebrachten Position um das mindestens eine Führungsmittel (32) schwenkbar ist.

9. Mähdrescher (2) nach Anspruch 8, **dadurch gekennzeichnet, dass** die Lagerstelle (31) als Widerlager ausgeführt ist.

10. Mähdrescher (2) nach einem der Ansprüche 1 bis 9, **dadurch gekennzeichnet, dass** die Verteilvorrichtung (18) ein Anschlagmittel (33) aufweist, dessen Anordnung beabstandet vom Schwerpunkt der Verteilvorrichtung (18) vorgesehen ist.

11. Mähdrescher (2) nach einem der Ansprüche 1 bis 10, **dadurch gekennzeichnet, dass** die Hebevorrichtung (22) als Kettenzug ausgeführt ist.

12. Mähdrescher (2) nach einem der Ansprüche 1 bis 10, **dadurch gekennzeichnet, dass** die Hebevorrichtung (22) als hydraulischer Koppelarm (23) ausgeführt ist.

13. Mähdrescher (2) nach einem der Ansprüche 1 bis 10, **dadurch gekennzeichnet, dass** die Hebevorrichtung (22) als ein über eine Winde betätigbares Drahtseil ausgeführt ist.

14. Mähdrescher (2) nach einem der Ansprüche 1 bis 13, **dadurch gekennzeichnet, dass** eine Häckseltrommel als Teil der Häckselvorrichtung (18) lösbar am Mähdrescher (2) angeordnet ist.

## Claims

1. A combine harvester (2) comprising a separating device (7) from which an emerging crop material flow can be fed to a chopping device (20) which processes the crop material and passes same to a distribution device (18) which is arranged downstream of the chopping device (20) and by which the processed crop material can be distributed on the ground (34), or the crop material flow issuing from the separating device (7) can be deposited in the form of a swathe on the ground (34), by-passing the chopping device (20) and the distribution device (18), wherein the distribution device (18) and/or parts of the chopping device (20) are arranged releasably on the combine harvester (2) for operation of the combine harvester (2) in a swathe depositing mode or in on-road transport, **characterised in that** the distribution device (18) and/or parts of the chopping device (20) can be picked up or set down by means of a lifting device (22) integrated into the combine harvester (2).

2. A combine harvester (2) according to claim 1 **characterised in that** the distribution device (18) can be coupled without a tool to a drive train of the combine harvester (2).

3. A combine harvester (2) according to claim 2 **characterised in that** the distribution device (18) can be coupled to the drive train by means of a mechanical coupling.

4. A combine harvester (2) according to one of claims 1 to 3 **characterised in that** the distribution device (18) can be coupled without a tool to a hydraulic and a power circuit of the combine harvester (2).

5. A combine harvester (2) according to claim 4 **characterised in that** the distribution device (18) has a coupling element which is in the form of a multi-coupler and by which the distribution device (18) can be simultaneously connected to or released from the hydraulic and the power circuits.

6. A combine harvester (2) according to one of claims 1 to 5 **characterised in that** provided on the distribution device (18) on its side towards the chopping device (20) is at least one guide means (32) which can be moved into a corresponding mounting location (31) on a housing portion of the combine harvester (2).

7. A combine harvester (2) according to claim 6 **characterised in that** the housing portion is part of a housing accommodating the chopping device (20).

8. A combine harvester (2) according to claim 6 or claim 7 **characterised in that** in its position of being introduced into the mounting location (31) the distribution device (18) is pivotable about the at least one guide means (32).

9. A combine harvester (2) according to claim 8 **characterised in that** the mounting location (31) is in the form of a support abutment.

10. A combine harvester (2) according to one of claims 1 to 9 **characterised in that** the distribution device (18) has an abutment means (34), the arrangement of which is provided spaced from the centre of gravity of the distribution device (18).

11. A combine harvester (2) according to one of claims 1 to 10 **characterised in that** the lifting device (22) is in the form of a chain hoist.

12. A combine harvester (2) according to one of claims 1 to 10 **characterised in that** the lifting device (22) is in the form of a hydraulic coupling arm (23).

13. A combine harvester (2) according to one of claims 1 to 10 **characterised in that** the lifting device (22) is in the form of a wire cable actuable by way of a winch.

14. A combine harvester (2) according to one of claims 1 to 13 **characterised in that** a chopping drum is arranged releasably on the combine harvester (2) as part of the chopping device (18).

## Revendications

1. Moissonneuse-batteuse (2) comprenant un dispositif séparateur (7) à partir duquel un flux de produit récolté sortant peut être dirigé vers un dispositif de hachage (20), lequel traite le produit récolté et le transfère à un dispositif d'épandage (18) qui est disposé en aval du dispositif de hachage (20) et par l'intermédiaire duquel le produit récolté traité peut être répandu sur le sol (34), ou le flux de produit récolté sortant du dispositif séparateur (7) peut être déposé sur le sol (34) sous forme d'andain en contournant le dispositif de hachage (20) et le dispositif d'épandage (18), le dispositif d'épandage (20) et/ou des parties du dispositif de hachage (20) étant disposés de façon amovible sur la moissonneuse-batteuse (2) pour un fonctionnement de la moissonneuse-batteuse (2) en mode andainage ou en déplacement sur route, **caractérisée en ce que** le dispositif d'épandage (18) et/ou des parties du dispositif de hachage (20) peuvent être saisis, respectivement déposés au moyen d'un dispositif de levage (22) intégré à la moissonneuse-batteuse (2).

2. Moissonneuse-batteuse (2) selon la revendication 1, **caractérisée en ce que** le dispositif d'épandage (18) peut être accouplé sans outil à la chaîne de transmission de la moissonneuse-batteuse (2).

3. Moissonneuse-batteuse (2) selon la revendication 2, **caractérisée en ce que** le dispositif d'épandage (18) peut être accouplé à la chaîne de transmission au moyen d'un accouplement mécanique.

4. Moissonneuse-batteuse (2) selon une des revendications 1 à 3, **caractérisée en ce que** le dispositif d'épandage (18) peut être accouplé sans outil à un circuit hydraulique et à un circuit électrique de la moissonneuse-batteuse (2).

5. Moissonneuse-batteuse (2) selon la revendication 4, **caractérisée en ce que** le dispositif d'épandage (18) comporte un élément d'accouplement qui est conformé en multicoupleur et par l'intermédiaire duquel le dispositif d'épandage (18) peut simultanément être relié au circuit hydraulique et au circuit électrique ou en être séparé.

6. Moissonneuse-batteuse (2) selon une des revendications 1 à 5, **caractérisée en ce que** sur le dispositif d'épandage (18), sur son côté tourné vers le dispositif de hachage (20), est prévu au moins un moyen de guidage (32) qui peut être inséré dans un point d'appui correspondant (31) disposé sur une portion de bâti de la moissonneuse-batteuse (2).

7. Moissonneuse-batteuse (2) selon la revendication 6, **caractérisée en ce que** la portion de bâti fait partie d'un bâti englobant le dispositif de hachage (20).

8. Moissonneuse-batteuse (2) selon la revendication 6 ou 7, **caractérisée en ce que**, dans sa position insérée dans le point d'appui (31), le dispositif d'épandage (18) peut pivoter autour du au moins un moyen de guidage (32).

9. Moissonneuse-batteuse (2) selon la revendication 8, **caractérisée en ce que** le point d'appui (31) est conformé en contre-appui.

10. Moissonneuse-batteuse (2) selon une des revendications 1 à 9, **caractérisée en ce que** le dispositif d'épandage (18) comporte un moyen de butée (33) dont l'emplacement est prévu à distance du centre de gravité du dispositif d'épandage (18).

11. Moissonneuse-batteuse (2) selon une des revendications 1 à 10, **caractérisée en ce que** le dispositif de levage (22) est conformé en chaîne de levage.

12. Moissonneuse-batteuse (2) selon une des revendications 1 à 10, **caractérisée en ce que** le dispositif de levage (22) est conformé en bras d'accouplement hydraulique (23).

13. Moissonneuse-batteuse (2) selon une des revendications 1 à 10, **caractérisée en ce que** le dispositif de levage (22) est conformé en câble métallique actionné par l'intermédiaire d'un treuil.

14. Moissonneuse-batteuse (2) selon une des revendications 1 à 13, **caractérisée en ce qu'**un rotor de hachage faisant partie du dispositif de hachage (18) est disposé de façon amovible sur la moissonneuse-batteuse (2).
